# EUROPEAN PATENT APPLICATION

(11) **EP 3 985 042 A1**
(43) Date of publication of application: **20.04.2022**
(21) Application number: 20202487.3
(22) Date of filing: 19.10.2020
(51) Int. Cl.: C08G 18/08, C08G 18/10, C08G 18/42, C08G 18/75, C09J 175/06

(54) **ADHESIVE COMPOSITION AND PREPARATION METHOD AND USE THEREOF**

(71) Applicant: Covestro Deutschland AG, 51373 Leverkusen (DE)
(72) Inventor: The designation of the inventor has not yet been filed
(74) Representative: Levpat

(57) **Abstract**

The invention relates to an adhesive composition, the preparation and use of said composition, and an article obtained by bonding using said composition. The adhesive composition comprises: a. an anionic aqueous polyurethane dispersion, which contains a polyurethane with enthalpy of fusion of at least 3 J/g, wherein the enthalpy of fusion is measured by DSC at 20°C-100°C of the first heating curve according to DIN 65467; and wherein said aqueous polyurethane dispersion has a hydroxyl content of 0.001% by weight to 0.085% by weight, relative to the total weight of the aqueous polyurethane dispersion; and b. an aqueous polyacrylate primary dispersion with a hydroxyl content of 0.5% by weight to 1.8% by weight, relative to the total weight of the aqueous polyacrylate primary dispersion; wherein the amount of the aqueous polyurethane dispersion is 30% by weight to 91% by weight, and the amount of the aqueous polyacrylate primary dispersion is 9% by weight to 70% by weight, the above weight percentages being relative to the total weight of the adhesive composition. The adhesive composition of the present invention has good high-temperature resistance.

## Description

### Technical field

The invention relates to an adhesive composition, the preparation and use of said composition, and an article obtained by bonding using said composition

### Prior art

Polyurethane adhesives have excellent bonding strength, which is mainly due to the physical bonding force generated by the close contact between the adhesive and the substrate, and further enhanced by the hydrogen bond of the polyurethane on the substrate.

After applying, drying and cooling of the adhesive comprising polyester-based aqueous polyurethane dispersion on the substrate, the adhesive forms a non-sticky film on the substrate, which is thermally activated to have bonding force. Thermal activation indicates that the aqueous polyurethane dispersion is melted and activated at a certain temperature (such as in a hot drying tunnel or by means of infrared radiation) and cooled immediately, and the polyester chains of the aqueous polyurethane dispersion begin to recrystallize, so that the bonding force of the adhesive reaches high strength quickly.

Adhesives comprising an aqueous polyurethane dispersion have been widely used in industrial fields, such as the furniture industry, the automobile industry, the shoe industry or the textile industry for producing composite fibers. Especially in the furniture industry, three-dimensional furniture panels are produced from the composites of decorative films on medium density fiberboards (MDF). In this process, the adhesives are applied to the MDF components and dried, and then the decorative films are bonded to MDF by hot press molding and finally molded into the shape of furniture parts.

US 2007/0054117 discloses a heat seal adhesive paper coated with a heat-activated polymer dispersion particularly suitable for "linerless label" applications. In order to avoid agglomeration, the polymer is required to have a melting temperature of greater than 104.4°C and a glass transition temperature of greater than 10°C. The adhesive paper of this system needs to be sealed under high temperature and high pressure.

US 5,354,588 discloses an adhesive layer for promoting the adhesion of a pressure-sensitive adhesive to a substrate in order to prevent the pressure-sensitive adhesive from transferring onto an adhesive-free surface during the unfolding of the label material. These pressure-sensitive adhesives are based on acrylate polymers.

CN103097482 discloses an aqueous adhesive comprising at least one acrylate polymer with a glass transition temperature of greater than 50°C and at least one amorphous polyurethane or polyurethane-polyurea polymer with a glass transition temperature of less than 10°C. The adhesive is used to prepare a heat-activated adhesive layer, which can be activated at a temperature of less than 90°C. When used as an adhesive layer on a roll, it does not need a release paper, and will not agglomerate even under high winding tension and at up to 50°C.

Compared with two-component adhesives, one-component adhesives are easier to operate and are popular in the industry. The existing one-component polyurethane adhesives have poor high-temperature resistance, resulting in poor high-temperature resistance of the articles bonded using them. Especially when the operating temperature is close to the activation temperature of the adhesives, adhesive failure may easily occur on the bonded part of the articles, thereby affecting the service life and quality of articles. Therefore, it is desired to develop an adhesive having good high-temperature resistance.

### Summary of the invention

The object of the present invention is to provide an adhesive composition, especially an adhesive composition with good high-temperature resistance, preparation and use of said composition, and an article obtained by bonding using the composition.

The adhesive composition according to the present invention comprises:
a. an anionic aqueous polyurethane dispersion, which contains a polyurethane with enthalpy of fusion of at least 3 J/g, wherein the enthalpy of fusion is measured by DSC at 20°C-100°C of the first heating curve according to DIN 65467; and wherein said aqueous polyurethane dispersion has a hydroxyl content of 0.001% by weight to 0.085% by weight, relative to the total weight of the aqueous polyurethane dispersion;
b. an aqueous polyacrylate primary dispersion with a hydroxyl content of 0.5% by weight to 1.8% by weight, relative to the total weight of the aqueous polyacrylate primary dispersion; and
c. optional additives;
   wherein the amount of the aqueous polyurethane dispersion is 30% by weight to 91% by weight, the amount of the aqueous polyacrylate primary dispersion is 9% by weight to 70% by weight, the above weight percentages being relative to the total weight of the adhesive composition.

One aspect of the present invention is to provide a method for preparing the adhesive composition of the present invention, including the step of mixing the anionic aqueous polyurethane dispersion, the aqueous polyacrylate primary dispersion and the optional additives in any desired manner; wherein the amount of the aqueous polyurethane dispersion is 30% by weight to 91% by weight, and the amount of the aqueous polyacrylate primary dispersion is 9% by weight to 70% by weight, the above weight percentages being relative to the total weight of the adhesive composition.

Another aspect of the present invention is to provide use of the adhesive composition of the present invention for producing articles.

Still another aspect of the present invention is to provide an article comprising a substrate and a coating formed by applying the adhesive composition of the present invention to the substrate.

Yet another aspect of the present invention is to provide a method for producing a bonded article, including the following steps:
i. applying the adhesive composition of the present invention to at least one surface of a substrate;
ii. thermally activating the surface of the substrate treated by step i; and
iii. bringing the surface of the substrate treated by step ii into contact with the substrate itself or a surface of another substrate to obtain the bonded article.

The adhesive composition of the present invention is an aqueous composition with good bonding force and good high-temperature resistance of the adhesives. The articles obtained by bonding of the present invention are not easily inclined to adhesive failure at high temperatures and have good aging resistance.

### Description of drawings

In the following, the present invention will be illustrated with reference to the accompanying drawings, in which:
Figure 1 is a schematic view of a device for testing the peeling distance of test samples;
Figure 2 shows the adhesive failure mode of the test samples resulting from the test for bonding force.

### Embodiments

The present invention provides an adhesive composition comprising:
a. an anionic aqueous polyurethane dispersion, which contains a polyurethane with enthalpy of fusion of at least 3 J/g, wherein the enthalpy of fusion is measured by DSC at 20°C-100°C of the first heating curve according to DIN 65467; and wherein said aqueous polyurethane dispersion has a hydroxyl content of 0.001% by weight to 0.085% by weight, relative to the total weight of the aqueous polyurethane dispersion;
b. an aqueous polyacrylate primary dispersion with a hydroxyl content of 0.5% by weight to 1.8% by weight, relative to the total weight of the aqueous polyacrylate primary dispersion; and
c. optional additives;
   wherein the amount of the aqueous polyurethane dispersion is 30% by weight to 91% by weight, the amount of the aqueous polyacrylate primary dispersion is 9% by weight to 70% by weight, the above weight percentages being relative to the total weight of the adhesive composition. The invention also provides a preparation method and use of said adhesive composition, and an article obtained by bonding using said adhesive composition.

The term "adhesive" as used herein refers to a chemical substance which can be coated on a surface of an object by various processes, form a coating layer on the object itself or on surfaces of one object and another object, and bond the object itself or said surfaces of one object and another object. Said term can also be used as synonyms for adhesive agent and/or sealants and/or tackifiers.

The term "polyurethane" as used herein refers to polyurethane urea and/or polyurethane polyurea and/or polyurea and/or polythiourethane.

The term "aqueous polyurethane dispersion" as used herein refers to an aqueous polyurethane urea dispersion and/or an aqueous polyurethane polyurea dispersion and/or an aqueous polyurea dispersion and/or an aqueous polythiourethane dispersion.

### Adhesive composition

The adhesive composition is an aqueous system, and has a characteristic of low VOC.

The amount of the organic solvent in the adhesive composition is preferably not more than 5% by weight, most preferably not more than 0.5% by weight, relative to the total weight of the adhesive composition.

The adhesive composition is preferably a one-component adhesive.

### Anionic aqueous polyurethane dispersion

The hydroxyl content of the anionic aqueous polyurethane dispersion is preferably 0.01% by weight to 0.03% by weight, relative to the total weight of the anionic aqueous polyurethane dispersion.

The enthalpy of fusion of the polyurethane contained in the anionic aqueous polyurethane dispersion is preferably 3 J/g to 100 J/g, the enthalpy of fusion being measured by DSC at 20°C-100°C of the first heating curve according to DIN 65467.

The average particle size of the aqueous polyurethane dispersion is preferably 30 nm to 400 nm, more preferably 100 nm to 300 nm, and most preferably 150 nm to 280 nm. The particle size is determined by laser spectroscopy (using Zatasizer 1000 laser particle size analyzer from Malvern Instruments) at 23°C after dilution with deionized water, and then the average value is calculated.

The weight average molecular weight of the aqueous polyurethane dispersion is preferably 190000 g/mol to 300000 g/mol, more preferably 220000 g/mol to 280000 g/mol, most preferably 240000 g/mol to 270000 g/mol. The weight average molecular weight of the aqueous polyurethane dispersion is determined by gel permeation chromatography (GPC) using
Instrument: Hewlett Packard 1100 Series II with a refractive index detector,
Column heating device: VDS-Optilab Jetstream 2 Plus,
Column:
1. PSS HEMA 40; 50×7.8 mm; Polymer Standard Services,
2. Suprema 1000; 300×7.8 mm; Polymer Standard Services,
3. PSS HEMA 300; 300×7.8 mm; Polymer Standard Services,
4. PSS HEMA 40; 300×7.8 mm; Polymer Standard Services,
5. PSS HEMA 40; 300×7.8 mm; Polymer Standard Services,
Mobile phase: dimethylacetamide (DMAC),
Conditions: flow rate 0.6 ml/min; pressure 110 bar; temperature 30°C,
Standard: PSS Polymer-Standard-Services GmbH, Mainz; Germany.

The solid content of the aqueous polyurethane dispersion is preferably 30% by weight to 70% by weight, relative to the total weight of the aqueous polyurethane dispersion.

The viscosity of the aqueous polyurethane dispersion is preferably 50 mPa·s to 1000 mPa·s.

The pH value of the aqueous polyurethane dispersion is preferably 6 to 8.

The amount of organic solvent remaining in the aqueous polyurethane dispersion is preferably less than 1.0% by weight, relative to the total weight of the solid ingredients of the aqueous polyurethane dispersion.

The aqueous polyurethane dispersion can be directly added to the adhesive composition in the form of a dispersion, or can also be added to the adhesive composition in the form of polyurethane and water separately, which are then mixed to form a dispersion.

The aqueous polyurethane dispersion comprises a polyurethane and water.

The aqueous polyurethane dispersion is preferably obtained by the reaction of a system comprising a polyester polyol, a polyisocyanate and a hydroxyl-bearing diamine.

The amount of the aqueous polyurethane dispersion is preferably 49% by weight to 89% by weight, relative to the total weight of the adhesive composition.

### Polyisocyanate

The functionality of the polyisocyanate is preferably not less than 2, and most preferably 2 to 4.

The polyisocyanate is preferably selected from aliphatic polyisocyanates, cycloaliphatic polyisocyanates, and their derivatives having iminooxadiazinedione, isocyanurate, uretdione, urethane, allophanate, biuret, urea, oxadiazinetrione, oxazolidinone, acylurea and/or carbodiimide group.

The aliphatic polyisocyanate is preferably selected from 1,6-hexamethylene diisocyanate, 2,2-dimethylpentamethylene diisocyanate, 2,2,4-trimethylhexamethylene diisocyanate, butene diisocyanate, 1,3-butadiene-1,4-diisocyanate, 2,4,4-trimethyl-1,6-hexamethylene diisocyanate, 1,6,11-undecane triisocyanate, 1,3,6-hexamethylene triisocyanate, 1,8-diisocyanato-4-isocyanatomethyl octane, bis(isocyanatoethyl) carbonate, bis(isocyanatoethyl) ether, methyl lysinate diisocyanate, lysine triisocyanate, bis(isocyanatomethyl)sulfide, bis(isocyanatoethyl)sulfide, bis(isocyanatopropyl)sulfide, bis(isocyanatohexyl)sulfide, bis(isocyanatomethyl)sulfone, bis(isocyanatomethyl)disulfide, bis(isocyanatoethyl)disulfide, bis(isocyanatopropyl)disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-thiapentane, 1,2,3-tris(isocyanatomethylthio)propane, 1,2,3-tris(isocyanatoethylthio)propane, 3,5-dithia-1,2,6,7-heptane tetraisocyanate, 2,6-diisocyanatomethyl-3,5-dithia-1,7-heptane diisocyanate, 2,5-diisocyanatomethylthiophene, isocyanatoethylthio-2,6-dithia-1,8-octane diisocyanate, thiobis(3-isothiocyanatopropane), thiobis(2-isothiocyanatoethane), dithiobis(2-isothiocyanatoethane) and hexamethylene diisocyanate, most preferably hexamethylene diisocyanate.

The cycloaliphatic polyisocyanate is preferably selected from 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, isophorone diisocyanate, 2,5-diisocyanatotetrahydrothiophene, 2,5-diisocyanatomethyl tetrahydrothiophene, 3,4-diisocyanatomethyl tetrahydrothiophene, 2,5-diisocyanato-1,4-dithiane, 2,5-diisocyanatomethyl-1,4-dithiane, 4,5-diisocyanato-1,3-dithiolane, 4,5-bis(isocyanatomethyl)-1,3-dithiacyclopentane, 4,5-diisocyanatomethyl-2-methyl-1,3-dithiolane, norbornane diisocyanate (NBDI), xylylene diisocyanate (XDI), hydrogenated xylylene diisocyanate (H₆XDI), 1,4-cyclohexane diisocyanate (H₆PPDI), 1,5-pentamethylene diisocyanate (PDI), meta-tetramethylxylylene diisocyanate (m-TMXDI) and cyclohexane diisothiocyanate, most preferably isophorone diisocyanate.

The polyisocyanate may also have isocyanate groups and isothiocyanate groups, such as 1-isocyanato-6-isothiocyanatohexane, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanato-1,3,5-triazine, 4-isocyanatophenyl-4-isothiocyanatophenyl sulfide and 2-isocyanatoethyl-2-isothiocyanatoethyl disulfide.

The polyisocyanate may also be a halogen-substituted, such as a chlorine-substituted, a bromine-substituted derivate, an alkyl-substituted, an alkoxy-substituted, a nitro-substituted, or a silane-substituted derivate of the above polyisocyanates, such as isocyanatopropyl triethoxysilane or isocyanatopropyl trimethoxysilane.

The polyisocyanate is most preferably selected from hexamethylene diisocyanate and isophorone diisocyanate.

The amount of the polyisocyanate is preferably 5 % by weight to 20 % by weight, most preferably 5 % by weight to 15 % by weight, relative to the total weight of the system.

### Polyester polyol

The amount of the polyester polyol is preferably 70% by weight to 94% by weight, most preferably 75% by weight to 90% by weight, relative to the total weight of the system.

The hydroxyl value of the polyester polyol is preferably 20 to 80.

The enthalpy of fusion of the polyester polyol is preferably at least 3 J/g, most preferably 3 J/g to 100 J/g, measured by DSC at 20°C-100°C of the first heating curve according to DIN 65467.

The number average molecular weight of the polyester polyol is preferably 1500 g/mol to 2500 g/mol.

The polyester polyol is preferably selected from linear polyester polyols, slightly branched polyester polyols, and homopolymers or mixed polymers of lactones.

The linear polyester polyol or slightly branched polyester polyol is prepared from the following components: aliphatic, cycloaliphatic or aromatic di- or polycarboxylic acids, such as succinic acid, methylsuccinic acid, glutaric acid, adipic acid, pimelic acid, suberic acid, azelaic acid, sebacic acid, nonane dicarboxylic acid, decane dicarboxylic acid, terephthalic acid, isophthalic acid, phthalic acid, tetrahydrophthalic acid, hexahydrophthalic acid, cyclohexanedicarboxylic acid, maleic acid, fumaric acid, malonic acid or trimellitic acid; anhydrides such as phthalic anhydride, trimellitic anhydride or succinic anhydrides or mixtures thereof; and low molecular weight polyols, and optionally higher functional polyols such as trimethylolpropane, glycerol or pentaerythritol, cycloaliphatic and/or aromatic di- and polyhydroxyl compounds.

The homopolymer or mixed polymer of lactones is preferably obtained by adding lactones or mixtures of lactones such as butyrolactone, ε-caprolactone and/or methyl-ε-caprolactone to a suitable di- and/or higher-functional starter molecule. The ε-caprolactone is preferably a polymer of ε-caprolactone.

The polyester polyol is preferably selected from a polyesterdiol of 1,6-hexanediol, neopentyl glycol and adipic acid, and poly-1,4-butanediol adipate diol.

### Hydroxyl-bearing diamine

The amount of the hydroxyl-bearing diamine is preferably 0.01% by weight to 0.5% by weight, most preferably 0.1% by weight to 0.5% by weight, relative to the total weight of the system.

The hydroxyl-bearing diamine is preferably selected from aminoethylethanolamine, aminoethylpropanolamine, aminopropylethanolamine and aminoethylbutanolamine, most preferably aminoethylethanolamine (HEEDA).

### Emulsifier

The system may further comprise an emulsifier. The amount of the emulsifier is preferably 0.1% by weight to 20% by weight, relative to the total weight of the system.

The emulsifier comprises preferably at least one isocyanate-reactive group and at least one emulsifying group or latent emulsifying group.

The isocyanate-reactive group is preferably selected from hydroxyl group, thiol group and amino group.

The emulsifying group or latent emulsifying group is preferably selected from sulfonic acid group, carboxylic acid group, tertiary amino group and hydrophilic polyether.

The emulsifier comprising a sulfonic acid group and/or a carboxylic acid group is preferably selected from diamino compounds comprising a sulfonic acid group and/or a carboxylic acid group, and dihydroxyl compounds comprising a sulfonic acid group and/or a carboxylic acid group, further preferably selected from sodium, potassium, lithium, tertiary ammonium salts of N-(2-aminoethyl)-2-aminoethanesulfonic acid, N-(3-aminopropyl)-2-aminoethanesulfonic acid, N-(3-aminopropyl)-3-aminopropanesulfonic acid, N-(2-aminoethyl)-3-aminopropanesulfonic acid, similar carboxylic acids, dimethylolpropanoic acid or dimethylolbutyric acid, most preferably selected from salts of N-(2-aminoethyl)-2-aminoethanesulfonic acid and dimethylolpropanoic acid.

The sulfonic acid group or the carboxylic acid group can be present in the form of their salt, such as sulfonate or carboxylate.

The sulfonic acid group or the carboxylic acid group can also be obtained by partly or completely adding a neutralizer to form a salt during or after the process for preparing the polyurethane polymers.

### Organic solvents

The system may further comprise an organic solvent, which is miscible with water but is inert to isocyanate groups.

The amount of the organic solvent is preferably 0.001% by weight to 20% by weight, relative to the total weight of the system.

The organic solvent is preferably selected from acetone, 2-butanone, tetrahydrofuran, xylene, toluene, cyclohexane, butyl acetate, 1,4-dioxane, methoxypropyl acetate, N-methyl pyrrolidone, N-ethyl pyrrolidone, acetonitrile, dipropylene glycol dimethyl ether and solvents containing an ether or ester unit, most preferably selected from acetone and 2-butanone.

The organic solvent may be added only at the beginning of the preparation. Alternatively, an additional part of the organic solvent may be added during the preparation process as required.

### Reactive diluent

The system may further comprise a reactive diluent.

The amount of the reactive diluent is preferably 0.001% by weight to 20% by weight, relative to the total weight of the system .

The reactive diluent is preferably selected from acrylic acid and acrylic ester.

### Preparation of the aqueous polyurethane dispersions

The aqueous polyurethane dispersion is preferably obtained by a reaction including the following steps:
A. reacting some or all of the polyisocyanate, the polyester polyol and the hydroxyl-bearing diamine to obtain a prepolymer, wherein the reaction is carried out in the presence of an optional organic solvent that is miscible with water but is inert to isocyanate groups, or the optional organic solvent that is miscible with water but is inert to isocyanate groups is add after the reaction to dissolve the prepolymer;
B. reacting the prepolymer, the optional emulsifier, the optional reactive diluent, the polyisocyanate not added in step A, the polyester polyol not added in step A, and the hydroxyl-bearing diamine not added in step A to obtain the polyurethane; and
C. introducing water and the optional emulsifier before, during or after step B to obtain the aqueous polyurethane dispersion .

All processes known in the prior art can be used to prepare the aqueous polyurethane dispersion of the present invention, such as emulsifier/shear force method, acetone method, prepolymer mixing method, melt emulsification method, ketimine method and solid spontaneous dispersing method or derivative methods thereof, etc., preferably melt emulsification method or acetone method, and most preferably acetone method. These methods are summarized in Methoden der organischen Chemie (Houben-Weyl, Erweiterungs- und Folgebande zur 4. Auflage, Volume E20, H Bartl and J. Falbe, Stuttgart, New York, Thieme 1987, p. 1671-1682).

The components of the system for preparing the aqueous polyurethane dispersion can be mixed in any conventional sequence.

The polyisocyanate, the polyester polyol and the hydroxyl-bearing diamine can be added at one time or in multiple times, and can be the same or different from those previously added.

The organic solvent present in the aqueous polyurethane dispersion can be removed by distillation. The organic solvent can be removed during the polyurethane formation or after the polyurethane formation.

### Aqueous polyacrylate primary dispersion

The aqueous polyacrylate primary dispersion is preferably self-crosslinked.

The hydroxyl content of the aqueous polyacrylate primary dispersion is preferably 0.8% by weight to 1.8% by weight, most preferably 0.8% by weight to 1.5% by weight, relative to the total weight of the aqueous polyacrylate primary dispersion.

The glass transition temperature of the aqueous polyacrylate primary dispersion is preferably 50°C to 80°C, most preferably 55°C to 70°C, and the glass transition temperature being determined by DSC (differential scanning calorimetry) according to DIN 65467.

The solid content of the aqueous polyacrylate primary dispersion is preferably 35% by weight to 45% by weight, relative to the total weight of the aqueous polyacrylate primary dispersion.

The average particle size of the aqueous polyacrylate primary dispersion is preferably 40 nm to 200 nm, more preferably 60 nm to 160 nm, and most preferably 60 nm to 100 nm. The particle size is determined by laser spectroscopy (using Zatasizer 1000 laser particle size analyzer from Malvern Instruments) at 23°C after dilution with deionized water, and then the average value is calculated.

The pH value of the aqueous polyacrylate primary dispersion is preferably 6 to 7.

The amount of the aqueous polyacrylate primary dispersion is preferably 9% by weight to 49% by weight, relative to the total weight of the adhesive composition.

The aqueous polyacrylate primary dispersion is most preferably a self-crosslinked aqueous polyacrylate primary dispersion comprising hydroxyl groups.

### Additives

The additives are preferably selected from EVA resin, pigments, fillers, organic light stabilizers, free radical blockers, dispersants, leveling agents, wetting agents, thickeners, defoamers, auxiliaries for facilitating the operation, solvents, adhesion promoters, antimicrobials, stabilizers, inhibitors and catalysts.

The amount of the additives may be well known to those skilled in the art, most preferably 0.5% by weight to 10% by weight, relative to the total weight of the adhesive composition.

The stabilizer is beneficial to reduce the hydrolysis of the composition and prolong the pot life of the composition.

The stabilizer is preferably selected from carbodiimide compounds, epoxy compounds, oxazoline compounds and aziridine compounds.

The amount of the stabilizer is preferably 0 % by weight to 10% by weight, more preferably 0.5% by weight to 10% by weight, most preferably 0.5% by weight to 2% by weight, relative to the amount of solid ingredients of the adhesive composition being 100% by weight.

The wetting agent is preferably a polyether modified siloxane. The amount of the wetting agent is preferably 0.05% by weight to 0.15% by weight, relative to the total weight of the adhesive composition.

The thickener is preferably Borchigel L75N. The amount of the thickener is preferably 1% by weight to 5% by weight, most preferably 1% by weight to 2.5% by weight, relative to the total weight of the adhesive composition.

### Articles

The article is selected from automotive interiors, food packaging and furniture.

The substrate is preferably selected from wood, plastic, metal, glass, textile, alloy, fabric, artificial leather, paper, cardboard, EVA, rubber, real leather, glass fiber, ethylene vinyl acetate copolymer, polyolefin, thermoplastic polyurethane, polyurethane foam, polymer fiber and graphite fiber, most preferably selected from EVA, rubber, real leather, artificial leather, ethylene vinyl acetate copolymer, polyolefin, thermoplastic polyurethane and polyurethane foam.

The application may refer to applying the composition to the entire surface of the substrate or only to one or more parts of the surface of the substrate.

The application may be brushing, dipping, spraying, roller coating, knife coating, flow coating, casting, printing or transfer printing, preferably brushing, dipping or spraying.

In the method for producing a bonded article, a step iv may be included between the step i and step ii, i.e. heating and drying the surface of the substrate to which the adhesive composition is applied. When the method for producing a bonded article further includes the step iv, step ii refers to thermally activating the surface of the substrate treated in step iv.

The step iv, i.e. heating and drying the surface of the substrate to which the adhesive composition is applied may refer to heating and drying only the surface of the substrate, or heating and drying the partial or entire substrate, including the surface of the substrate to which the adhesive composition is applied.

Volatile components are removed by the heating and drying, which may be water.

Higher heating temperature is better. But the heating temperature should not be higher than the temperature limit at which the substrate deforms in an uncontrollable manner or encounters other damage.

The thermal activation can be carried out in an oven, a drying tunnel or by infrared radiation heating.

The thermal activation temperature of the step ii is preferably room temperature to 110°C, more preferably 40°C to 100°C, most preferably 50°C to 80°C.

The contact is preferably performed before the temperature of the surface of the substrate is lowered below the bonding temperature of the adhesive composition.

The another substrate may be any substrate that requires to be bonded.

The another substrate and the substrate may be the same or different.

The another substrate is preferably also treated by coating and heating as the substrate.

### Examples

Unless otherwise defined, all technical and scientific terms used herein have the same meaning as commonly understood by those skilled in the art to which the present invention belongs. When the definitions of terms in this specification conflict with the meanings commonly understood by those skilled in the art to which the present invention belongs, the definitions described herein shall apply.

Unless otherwise stated, all numerical values used in the specification and claims expressing the amounts of ingredients, reaction conditions, etc. are understood to be modified by the term "about." Therefore, unless otherwise indicated, the numerical parameters set forth here are approximate values that can be changed according to the required performance to be obtained.

As used herein, "and/or" refers to one or all of the mentioned elements.

As used herein, "comprise/comprising" and "include/including" cover the cases in which only the mentioned elements are present and also the cases in which there are other unmentioned elements besides the mentioned elements.

All percentages in the present invention are percentages by weight, unless otherwise stated.

The measurements in the present invention are all performed at 23 °C, unless otherwise specified.

Unless otherwise stated, "a", "an", "the" and "said" used in this specification are intended to include "at least one" or "one or more". For example, "a component" refers to one or more components, so that more than one component may be considered and may be utilized or used in the implementation of the described embodiments.

The solid content of the dispersion was measured using an HS153 moisture analyzer from Mettler Toledo according to DIN-EN ISO 3251.

The pH value was measured at 23°C using a PB-10 pH meter from Sartorius, Germany.

The viscosity of the dispersion was measured using VT-500 rotational viscometer from Haake according to DIN 53019.

### Raw materials and reagents

Polyester polyol I: poly-1,4-butanediol adipate diol. OH value of 50, melting temperature of 49°C, enthalpy of fusion of 91.0 J/g, number average molecular weight 2323 g/mol, purchased from Covestro, Germany.
Polyester polyol II: polyesterdiol composed of 1,6-hexanediol, neopentyl glycol and adipic acid, OH value of 66, number average molecular weight of 1691 g/mol, purchased from Covestro, Germany.

Polyester polyol III: polyesterdiol of 1,6-hexanediol and phthalic acid, OH value of 56, purchased from Covestro, Germany.
Desmodur ^{®} H: 1,6-hexamethylene diisocyanate, purchased from Covestro, Germany.
Desmodur ^{®} I: isophorone diisocyanate, purchased from Covestro, Germany.
AAS: sodium salt of N-(2-aminoethyl)-2-aminoethanesulfonic acid NH₂-CH₂CH₂-NH-CH₂CH₂-SO₃Na, 45% in water, purchased from Covestro, Germany.
Emulgatorfed 400: fatty alcohol poly(ethylene glycol/propylene glycol) ether, emulsifier, purchased from LANXESS, Germany.
Lucramul 1820: emulsifier.
Diethanolamine: purity ≥ 99.0%, purchased from Sinopharm Chemical Reagent Co., Ltd. 1,4-Butanediol: purity ≥ 99.0%, purchased from ACROS Organics, Germany.
Ethylenediamine: 69%, purchased from Aldrich, Germany.
Aminoethylethanolamine: purity ≥ 99.0%, purchased from ABCR, Germany.
PRIMAL^{™} ECONEXT^{™} 1101 emulsion: modified acrylic resin with low formaldehyde content, primary dispersion, solid content of 45% by weight, pH value of 7, viscosity of 500 mPa·s, glass transition temperature of 58°C, purchased from Dow.
DESMOPHEN 1380BT: polyether polyol, purchased from Covestro, Germany.
Acrylic acid: purity ≥ 99.0%, purchased from Aldrich, Germany.
Methyl methacrylate: purity ≥ 99.0%, purchased from ACROS Organics, Germany.
Styrene: purity ≥ 99.0%, purchased from Aldrich, Germany
Hydroxypropyl methacrylate: purity ≥ 99.0%, purchased from Aldrich, Germany
Hydroxyethyl methacrylate: purity ≥ 99.0%, purchased from Aldrich, Germany
Diacetone acrylamide: purity ≥ 99.0%, purchased from ACROS Organics, Germany.
Ethylhexyl acrylate: purity ≥ 99.0%, purchased from Aldrich, Germany
Adipic dihydrazide: purity ≥ 99.0%, purchased from ACROS Organics, Germany
N-butyl acrylate: purity ≥ 99.0%, purchased from Aldrich, Germany
Ammonium persulfate: purity ≥ 99.0%, purchased from Aldrich, Germany.
Tannemul ^{®} 951: emulsifier, purchased from Tanatex, Germany.
N-dodecyl mercaptan: purity ≥ 99.0%, purchased from Aldrich, Germany.
BYK349: polyether modified siloxane, wetting and dispersing agent, purchased from BYK Chemical Company, Germany.
Borchigel L75N: solid content of 25% by weight, thickener, purchased from OMG.

Table 1 shows the raw material components and their contents for preparing the aqueous polyurethane dispersions 1 to 4, and the solid content, pH value, viscosity, average particle size and weight average molecular weight of the prepared anionic aqueous polyurethane dispersions, as well as the enthalpy of fusion of the polyurethane contained in the aqueous polyurethane dispersions and the hydroxyl content of the aqueous polyurethane dispersions. Table 2 shows the raw material components and their contents of the aqueous polyacrylate primary dispersions 1 to 3, and the solid content, pH value, viscosity, hydroxyl content, glass transition temperature and average particle size of the prepared aqueous polyacrylate dispersions. Table 3 shows the composition of the adhesive compositions of Examples 1 to 3 and Comparative Examples 1 to 9, and test results of the aging resistance and the bonding force of the test samples.

**Table 1 Aqueous polyurethane dispersions 1 to 4**

| | PUD1 | PUD 2 | PUD 3 | PUD 4 |
|---|---|---|---|---|
| Components of the system for preparing the aqueous polyurethane dispersions | | | | |
| Polyester polyol I/g | 0 | 450 | 368.6 | 450 |
| Polyester polyol II /g | 0 | 0 | 0 | 42.5 |
| Polyester polyol III /g | 450 | 0 | 0 | 0 |
| Desmodur ^{®} H /g | 66.3 | 30.1 | 39.5 | 37.8 |
| Desmodur ^{®} I/g | 0 | 20.1 | 25.9 | 25 |
| AAS/g | 12.3 | 13.1 | 14.4 | 12.2 |
| EMULGATORFD 400 /g | 34.2 | 33.6 | 0 | 34.2 |
| LUCRAMUL 1820 /g | 0 | 0 | 69 | 0 |
| Water /g | 59.4 | 1.5 | 39 | 59.4 |
| Diethanolamine /g | 0 | 2.6 | 0 | 1.2 |
| 1,4-Butanediol/g | 0 | 0 | 6.4 | 2.3 |
| Ethylenediamine /g | 2.3 | 0 | 4.4 | 0 |
| Aminoethylethanolamine /g | 0 | 0 | 0 | 1.1 |
| Acetone /g | 925 | 750 | 750 | 770 |
| Water /g | 517 | 728 | 487.2 | 518 |

| Characteristics of the aqueous polyurethane dispersions | | | | |
|---|---|---|---|---|
| Solid content /% by weight | 50 | 50 | 45 | 50 |
| Viscosity /mPa·s | 150 to 800 | 40 to 600 | 10 to 1000 | 50 to 800 |
| Average particle size/nm | 300 | 200 | 100 | 200 |
| Weight average molecular weight / g/mol | 250000 | 140000 | 280000 | 260000 |
| pH value | 7.5±1.5 | 7.5±1.5 | 6-9 | 7.5±1.5 |
| Enthalpy of fusion of the polyurethane contained in aqueous polyurethane dispersions / J/g | <3 | 51.01 | 51.58 | 56.9 |
| Hydroxyl content of the aqueous polyurethane dispersions, relative to the total weight of the aqueous polyurethane dispersion / % by weight | 0 | 0 | 0 | 0.018 |

**Table 2 Aqueous polyacrylate primary dispersions 1 to 3**

| | | Aqueous polyacrylate primary dispersion 1 | Aqueous polyacrylate primary dispersion 2 | Aqueous polyacrylate primary dispersion 3 |
|---|---|---|---|---|
| Raw materials for preparing aqueous polyacrylate primary dispersions | | | | |
| | Tannemul ^{®} 951 /g | 3.5 | 72.6 | 3.81 |
| Mixture 1 | Methyl methacrylate / g | 0 | 33.9 | 10.3 |
| | Styrene /g | 71.2 | 0 | 14.9 |
| | Acrylic acid /g | 3.1 | 7.1 | 2.06 |
| | Hydroxypropyl methacrylate /g | 17.6 | 60.1 | 97.7 |
| | N-butyl acrylate /g | 10.1 | 71 | 42.8 |
| | DESMOPHEN 1380 BT /g | 0 | 0 | 18.5 |
| | N-dodecyl mercaptan /g | 0 | 1.8 | 0 |
| Mixture 2 | Ammonium persulfate /g | 0.5 | 0.5 | 1.2 |
| | Deionized water /g | 27 | 18.9 | 23.24 |
| Mixture 3 | Styrene /g | 640.2 | 0 | 70.6 |
| | Acrylic acid /g | 28.1 | 134.8 | 1.68 |
| | Hydroxypropyl methacrylate /g | 158.2 | 1142.6 | 36.4 |
| | N-butyl acrylate /g | 90.8 | 1348 | 20.2 |
| | Methyl methacrylate /g | 0 | 643.7 | 49.1 |
| | N-dodecyl mercaptan /g | 0 | 33.7 | 0 |
| Mixture 4 | Ammonium persulfate /g | 3.1 | 10.1 | 0.56 |
| | Tannemul ^{®} 951 /g | 94 | 0 | 1,8 |
| | Deionized water /g | 200 | 381 | 17 |
| Mixture 5 | Ammonium persulfate /g | 0.5 | 3.5 | 0.59 |
| | Tannemul ^{®} 951 /g | 0 | 0 | 1.9 |
| | Deionized water /g | 27 | 140 | 18 |
| Mixture 6 | 3.3% Ammonia /g | 54.6 | 0 | 0 |
| | 25% Ammonia /g | 0 | 67.1 | 3.9 |
| | Deionized water /g | 0 | 171.1 | 28.2 |

| Characteristics of the aqueous polyacrylate primary dispersions | | | | |
|---|---|---|---|---|
| Solid content / % by weight | | 42 | 42 | 41 |
| pH value | | 8-9 | 7.1+0.7 | 7-9 |
| Viscosity /mPa·s | | 100 | 200±100 | 200 |
| Hydroxyl content, relative to the total weight of the aqueous polyacrylate dispersion / % by weight | | 2.0 | 4.0 | 4.8 |
| Glass transition temperature Tg /°C | | 80 | 29 | 64 |
| Average particle size /nm | | 120 | 95 | 112 |

### Preparation of aqueous polyurethane dispersions 1 to 4

According to the raw material components and their contents shown in Table 1, the polyester polyol was dehydrated at 100°C and 15 mbar for 1 hour and the isocyanate was added at 60°C to obtain a mixture. The mixture was stirred at 90°C until the isocyanate content reached 1.80%. The reaction mixture was dissolved in acetone and cool to 50°C. The AAS, the optional Emulgatorfd 400, the optional Lucramul 1820, water, the optional diethanolamine, the optional 1,4-butanediol, the optional ethylenediamine and the optional aminoethylethanolamine were added under intensive stirring. After further stirring for 30 minutes, water was added within 20 minutes at 50°C for dispersion. The solvent was removed by distillation to obtain aqueous polyurethane dispersions 1 to 4.

### Preparation of aqueous polyacrylate primary dispersions 1-3

According to the raw material components and their contents shown in Table 2, the emulsifier Tannemul^{®} 951 and water in the corresponding amount were mixed and heated to 80°C under a nitrogen atmosphere in a 3 liter glass reactor with a controllable heating and cooling system and a stirring motor. The pre-mixed mixture 1 and the pre-mixed mixture 2 were added by a metering pump. Then, the pre-mixed mixture 3 and the pre-mixed mixture 4 were added immediately, and then the pre-mixed mixture 5 was added immediately. The resulting mixture was further stirred for 60 minutes and then cooled, with the pH value being set to 7. The pre-mixed mixture 6 was dropwise added in the corresponding amount slowly. The aqueous polyacrylate primary dispersions 1 to 3 were finally obtained by discharge through a 125 mm filter.

### Preparation of the aqueous polyacrylate primary dispersion 4

11.1 g of Tannemul ^{®} 951 with a concentration of 21.5% and 500 g of water were mixed and heated to 80°C under a nitrogen atmosphere in a 3 liter glass reactor with a controllable heating and cooling system and a stirring motor. A pre-mixed mixture (14.1g of methyl methacrylate, 2.5g of ethylhexyl acrylate, 14g of styrene, 2g of acrylic acid, 3g of hydroxyethyl methacrylate) and a mixture (0.5g of ammonium persulfate, 70g of deionized water) were added by a metering pump within 30 minutes and stirred for 30 minutes. Then, a mixture (85.9 g of methyl methacrylate, 8.8 g of ethylhexyl acrylate, 132.6 g of styrene, 12.1 g of acrylic acid, 32 g of hydroxyethyl methacrylate, 6.2 g of diacetone acrylamide) and a mixture (0.77g of ammonium persulfate, 3.7g of Tannemul^{®} 951 with a concentration of 21.5% and 185g of deionized water) was added, and a mixture (171.6g of methyl methacrylate, 177.3g of ethylhexyl acrylate, 169.4g of styrene, 14.1g of acrylic acid, 72 g of hydroxyethyl methacrylate, 12.4 g of diacetone acrylamide). Then a mixture (1.54 g of ammonium persulfate, 7.4 g of Tannemul^{®} 951 with a concentration of 21.5%, 372 g of deionized water) was add immediately. Thereafter, a mixture (0.5g of ammonium persulfate, 70g of deionized water) was add immediately. The resulting mixture was further stirred for 60 minutes and then cooled. A mixture (6.1g of ammonia with a concentration of 33% and 40g of deionized water) and a mixture (9.57g of adipic dihydrazide, 147g of deionized water) were dropwise added slowly. Finally, the self-crosslinked aqueous polyacrylate primary dispersion PAC4 was obtained by discharge through a 125 mm filter, which had the following characteristics: solid content of 40% by weight, hydroxyl content of 1.5% by weight, and the above weight percentages being relative to the total weight of the aqueous polyacrylate primary dispersion 4, the glass transition temperature of 64°C, pH value of 6.5, viscosity of 50 to 100 mPa·s, and average particle size of 80 nm.

### Preparation of the adhesive composition of Examples and Comparative Examples

According to the components and their contents shown in Table 3, the aqueous polyurethane dispersion and the aqueous polyacrylate dispersion were added into the container. The container was placed under a dispersing machine and the mixture was dispersed at a speed of 1000 rpm to 1500 rpm (2.1 to 3.2 m/s) for 10 to 15 minutes. Then, BYK-349 and Borchigel L75N (previously mixed with deionized water at a ratio of 1:1) were added and dispersed at a speed of 1000 to 1500 rpm (2.1 to 3.2 m/s) for 10 to 15 minutes. In such way, the above components were well stirred to obtain an adhesive composition.

### Preparation of test samples and test for aging resistance and bonding force of the test samples

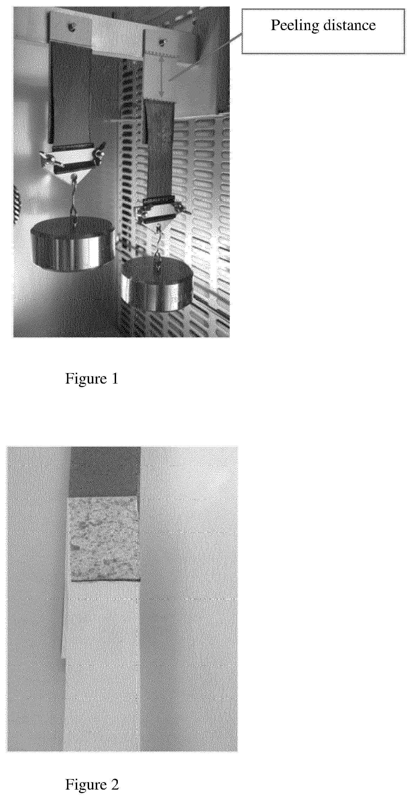

The adhesive composition was knife coated with an amount of 50g/m² (dry weight of the adhesive) on MDF (medium density board) using a 100µm bar. The coated MDF was placed in an oven at 50°C for drying for 10 to 15 minutes, then in an oven at 85°C for activating for 2 minutes, and subsequently took out immediately to laminate with PVC with a lamination length of 100 mm. The PVC-laminated MDF was placed into a molding press for pressing, which was set to a temperature of 103°C, a pressure of 4 bar, and a pressing time of 10 seconds. Finally, it was placed at room temperature for 3 days to obtain a test sample.
1. Test for aging resistance: The prepared test sample was placed into an aging box (having an initial test temperature of 80°C). A weight of 2.5kg was hanged on the PVC end of the sample. The distance in which the PVC was pulled apart from the sample in 5 minutes and 30 minutes was recorded respectively as the peeling distance (referring to Figure 1). When the test sample was not fully degummed in 5 minutes or 30 minutes, the time until the full degumming was recorded. The peeling distance was the length measured with a scaled rule in the bonded area of the test sample, which was separated apart after the test. Full degumming means that the bonded area of the sample was completely separated apart.

### Description of rating standard:

A peeling distance of less than 2mm within 5 minutes was regarded as qualified. The smaller the value (the shorter the distance), the better the result.
A peeling distance of less than 40mm within 30 minutes was regarded as qualified. The smaller the value (the shorter the distance), the better the result.
2. Test for bonding force: A 180° peeling test was carried out on the prepared samples using a Zwick material tester at room temperature for determining the bonding force value and recording the failure mode of the test samples. The peeling speed was 100 mm/min, and the width of the sample was 30 mm.

### Description of rating standard:

A bonding force value of greater than 2.0 aver. N/mm was regarded as qualified. The failure mode of PVC with wood chips was shown in Figure 2.

**Table 3 The composition and test results of the adhesive compositions of Examples and Comparative Examples**

| Composition of adhesive compositions /g | | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|---|---|---|
| Aqueous polyurethane dispersion | PUD1 | | | | | | | | 90 | | | | |
| | PUD2 | | | | | | | | | 90 | | | |
| | PUD3 | | | | | | | | | | 90 | | |
| | PUD4 | 90 | 75 | 50 | 90 | 90 | 90 | 90 | | | | 100 | 25 |
| Aqueous polyacrylate primary dispersion | PAC 1 | | | | 10 | | | | | | | | |
| | PAC2 | | | | | 10 | | | | | | | |
| | PAC3 | | | | | | 10 | | | | | | |
| | PAC4 | 10 | 25 | 50 | | | | | 10 | 10 | 10 | | 75 |
| | PRIMAL^{™} ECONEXT ^{™} 1101 emulsion | | | | | | | 10 | | | | | |
| BYK349 | | 0.1 | 0.1 | 0.1 | 0.1 | 0.1 | 0.1 | 0.1 | 0.1 | 0.1 | 0.1 | 0.1 | 0.1 |
| Borchigel L75N (mixed with deionized water at a ratio of 1:1) | | 2.0 | 20 | 20 | 2.0 | 2.0 | 2.0 | 2.0 | 2.0 | 2.0 | 2.0 | 2.0 | 2.0 |
| Performance of the test samples | | | | | | | | | | | | | |
| Peeling distance/mm | 5 minutes | 0 | 0 | 0 | 15 | 15 | 10 | 13 | 20 | 37 | 6 | 3 | 0 |
| | 30 minutes | 25 | 20 | 37 | >100 | >100 | >100 | >100 | >100 | >100 | >100 | >100 | 40 |
| Bonding force / aver.N/mm | | 2.43 | 3.30 | 3.50 | 2.22 | 2.81 | 2.61 | 2.12 | 2.10 | 1.82 | 2.30 | 2.51 | 0.31 |
| Failure mode of test samples | | PVC with wood chips | | | | | | | | | | | |

The test samples obtained by bonding using the adhesive compositions of the present invention of Examples 1 to 3 had good bonding force and short peeling distance at 80°C, which means the samples had good aging resistance at high temperatures, indicating that the adhesive composition had good high-temperature resistance.

The hydroxyl contents of the aqueous polyacrylate primary dispersions contained in the adhesive compositiona of Comparative Examples 1 to 3 were 2.0% by weight, 4.0% by weight and 4.8% by weight, respectively. The peeling distances at 80°C of the test samples obtained by bonding using the adhesive compositions were long, which means the samples had poor aging resistance at high temperatures, indicating that the adhesive compositions had poor high-temperature resistance.

The PRIMAL^{™} ECONEXT^{™} 1101 emulsion contained in the adhesive composition of Comparative Example 4 comprised no hydroxyl group. The test sample obtained by bonding using the adhesive composition had a long peeling distance at 80°C, which means the sample had poor aging resistance at high temperatures, indicating that the adhesive composition had poor high-temperature resistance.

The aqueous polyurethane dispersion contained in the adhesive composition of Comparative Example 5 was amorphous, had enthalpy of fusion of less than 3 J/g, and comprised no hydroxyl group. The test sample obtained by bonding using the adhesive composition had a long peeling distance at 80°C, which means the sample had poor aging resistance at high temperatures, indicating that the adhesive composition had poor high-temperature resistance.

The aqueous polyurethane dispersions contained in the adhesive compositions of Comparative Examples 6 and 7 comprised no hydroxyl group. The test samples obtained by bonding using the adhesive compositions had a long peeling distance at 80°C, which means the samples had poor aging resistance at high temperatures, indicating that the adhesive compositions had poor high-temperature resistance.

The adhesive composition of Comparative Example 8 comprised no aqueous polyacrylate dispersion. The test sample obtained by bonding using the adhesive composition had a long peeling distance at 80°C, which means the sample had poor aging resistance at high temperatures, indicating that the adhesive composition had poor high-temperature resistance.

The amount of the aqueous polyurethane dispersion of the adhesive composition of Comparative Example 9 was 24.5% by weight, and the amount of the aqueous polyacrylate dispersion was 73.5% by weight, relative to the total weight of the adhesive composition. The test sample obtained by bonding using the adhesive composition had a poor bonding force and a long peeling distance at 80°C, which means the sample had poor aging resistance at high temperatures, indicating that the adhesive composition had poor high-temperature resistance.

Those skilled in the art will readily understand that the present invention is not limited to the foregoing specific details. The present invention can be implemented in other specific forms without departing from the spirit or main characteristics of the present invention. Therefore, the embodiments should be regarded as illustrative rather than restrictive from any point of view, so that the scope of the present invention is defined by the claims rather than the foregoing description. Thus, any changes should be regarded as belonging to the present invention, as long as they are coved by the meaning and scope of the claims.

## Claims

1. An adhesive composition comprising:
a. an anionic aqueous polyurethane dispersion, which contains a polyurethane with enthalpy of fusion of at least 3 J/g, wherein the enthalpy of fusion is measured by DSC at 20°C-100°C of the first heating curve according to DIN 65467, and wherein said aqueous polyurethane dispersion has a hydroxyl content of 0.001% by weight to 0.085% by weight, relative to the total weight of the aqueous polyurethane dispersion;
b. an aqueous polyacrylate primary dispersion with a hydroxyl content of 0.5% by weight to 1.8% by weight, relative to the total weight of the aqueous polyacrylate primary dispersion; and
c. optional additives;
wherein the amount of the aqueous polyurethane dispersion is 30% by weight to 91% by weight, the amount of the aqueous polyacrylate primary dispersion is 9% by weight to 70% by weight, the above weight percentages being relative to the total weight of the adhesive composition.

2. The adhesive composition according to claim 1, wherein the average particle size of the aqueous polyurethane dispersion is 30 nm to 400 nm, more preferably 100 nm to 300 nm, most preferably 150 nm to 280 nm.

3. The adhesive composition according to claim 1 or 2, wherein the weight average molecular weight of the aqueous polyurethane dispersion is 190000 g/mol to 300000 g/mol, more preferably 220000 g/mol to 280000 g/mol, most preferably 240000 g/mol to 270000 g/mol, the weight average molecular weight being measured by gel permeation chromatography (GPC).

4. The adhesive composition according to any one of claims 1 to 3, wherein the aqueous polyurethane dispersion is obtained by the reaction of a system comprising a polyester polyol, a polyisocyanate and a hydroxyl-bearing diamine.

5. The adhesive composition according to claim 4, wherein the amount of the polyester polyol is 70% by weight to 94% by weight, most preferably 75% by weight to 90% by weight, relative to the total weight of the system.

6. The adhesive composition according to claim 4, wherein the amount of the hydroxyl-bearing diamine is 0.01% by weight to 0.5% by weight, most preferably 0.1% by weight to 0.5% by weight, relative to the total weight of the system.

7. The adhesive composition according to any one of claims 1-6, wherein the aqueous polyacrylate primary dispersion is self-crosslinked.

8. The adhesive composition according to any one of claims 1-7, wherein the hydroxyl content of the aqueous polyacrylate primary dispersion is 0.8% by weight to 1.8% by weight, most preferably 0.8% by weight to 1.5% by weight, relative to the total weight of the aqueous polyacrylate primary dispersion.

9. The adhesive composition according to any one of claims 1-8, wherein the glass transition temperature of the aqueous polyacrylate primary dispersion is 50°C to 80°C, most preferably 55°C to 70°C, the glass transition temperature being measured by DSC (differential scanning calorimetry) according to DIN 65467.

10. The adhesive composition according to any one of claims 1-9, wherein the average particle size of the aqueous polyacrylate primary dispersion is 40 nm to 200 nm, most preferably 60 nm to 160 nm.

11. A method for preparing the adhesive composition according to any one of claims 1-10, including the step of mixing the anionic aqueous polyurethane dispersion, the aqueous polyacrylate primary dispersion and the optional additives in any desired manner; wherein the amount of the aqueous polyurethane dispersion is 30% by weight to 91% by weight, and the amount of the aqueous polyacrylate primary dispersion is 9% by weight to 70% by weight, the above weight percentages being relative to the total weight of the adhesive composition.

12. Use of the adhesive composition according to any one of claims 1-10 for producing articles.

13. The use according to claim 12, wherein the article is selected from car interiors, food packaging and furniture.

14. An article comprising a substrate and a coating formed by applying the adhesive composition according to any one of claims 1-10 to the substrate.

15. A method for producing a bonded article, including the following steps:
i. applying the adhesive composition according to any one of claims 1-10 to at least one surface of a substrate;
ii. thermally activating the surface of the substrate treated by step i; and
iii. bringing the surface of the substrate treated by step ii into contact with the substrate itself or a surface of another substrate to obtain the bonded article.

16. The method according to claim 15, wherein the thermal activation temperature is room temperature to 110°C, more preferably 40°C to 100°C, most preferably 50°C to 80°C.
